# EUROPÄISCHE PATENTSCHRIFT

(11) **EP 1 136 771 B1**
(45) Veröffentlichungstag und Bekanntmachung des Hinweises auf die Patenterteilung: **27.07.2005**
(21) Anmeldenummer: 01101317.4
(22) Anmeldetag: 20.01.2001
(51) Int. Cl.: F25B 33/00, F25B 15/10

(54) **Rektifikator für eine Diffusionsabsorptionsanlage**
Rectifier for diffusion absorption system
Rectificateur pour système d'absorption à diffusion

(30) Priorität: 22.03.2000 DE 10014124; 22.03.2000 DE 20005331 U
(43) Veröffentlichungstag der Anmeldung: 26.09.2001
(73) Patentinhaber: BBT Thermotechnik GmbH, 35576 Wetzlar (DE)
(72) Erfinder: Schulte, Uwe, 35037 Marburg (DE); Korinth, Christoph, 57555 Mudersbach (DE); Vloon, Paulus Jacobus, 7422 RM Deventer (NL); Wierenga, Hendrik Jacob Lammert, 8196 KC Welsumer (NL)

(56) Entgegenhaltungen:
- EP-A- 0 413 791
- EP-A- 0 419 606
- CH-A- 475 527
- GB-A- 1 338 495
- US-A- 5 713 216

## Beschreibung

Die Erfindung betrifft einen Rektifikator für eine Diffusionsabsorptionsanlage nach dem Oberbegriff des Patentanspruches 1.

Diffusionsabsorptionsanlagen sind als Kleinkälteanlagen zur Verwendung in Haushaltskühlschränken seit langem bekannt. Sie können mit einer entsprechenden konstruktiven Gestaltung auch als Wärmepumpen zu Heiz- oder Kühlzwecken eingesetzt werden. In diesen Anlagen wird das Kältemittel Ammoniak (NH₃) und Wasser als Stoffpaar eingesetzt. Dabei stellt das Wasser als Lösungsmittel den absorbierenden Stoff dar, wobei als druckausgleichendes Trägergas in der Regel Wasserstoff oder Helium verwendet wird. Als Arbeitsmedium im Kreisprozess setzt sich das Ammoniak-Wasser-Gemisch bei Wärmezufuhr durch Temperatur- und Konzentrationsunterschiede in Bewegung.

Die Wärmezufuhr erfolgt in einem Kocher. Durch Sieden werden Gasblasen aus der NH₃-reichen Lösung ausgetrieben. Der Wasseranteil in diesem Gasstrom wird im Rektifikator abgeschieden bzw. zurückgeführt, so dass fast nur NH₃-Dampf zum Kondensator strömt. Dabei muss die Gasblasenpumpe so ausgebildet sein, dass sie die Flüssigkeit auf eine erhebliche Höhe pumpt, um die nötige Antriebskraft zu erzeugen. Der hochreine Ammoniakdampf kondensiert und gibt dabei die Kondensationswärme an das Heizungswasser ab. Anschließend strömt das flüssige Ammoniak nach unten in den Verdampfer. In der Helium-Ammoniak-Atmosphäre verdampft das Ammoniak unter Aufnahme von Umgebungsenergie. Danach gelangt das Gasgemisch durch einen Gas-Gas-Wärmetauscher und strömt zum Absorber, wo das gasförmige Ammoniak von der NH₃-armen Ammoniak-Wasser-Lösung absorbiert wird und die Absorptionswärme an das Heizungswasser abgibt, bevor der geräuschfreie Prozess wieder neu beginnt.

Sowohl die EP 0 413 791 B1 als auch die EP 0 419 606 B1 zeigen eine Diffusionsabsorptionsanlage mit den einzelnen Aggregaten. Diese sind jeweils als separate Bauteile ausgeführt und über Leitungen miteinander verbunden. Weil der Arbeitsdruck bei derartigen Anlagen mehr als 20 bar beträgt, müssen alle Aggregate und Leitungen entsprechend druckfest gestaltet sein. Daher ergibt sich bei diesem Aufbau eine große Anzahl von Schweißnähten, die sehr hochwertig bzw. genau ausgeführt sein müssen. Insgesamt entsteht für die einzelnen Druckbehälter und Leitungen ein erheblicher Material-, Fertigungs- und Prüfaufwand.

Bei der bekannten Ausführungsform ist der Rektifikator als Dreifach-Wärmetauscher mit konzentrischen Rohrspiralen sowie drei ineinander liegenden Hohlräumen außen um den Druckbehälter des Kochers gewickelt und über einzelne Leitungen an die entsprechenden Zonen in dessen Innenraum angeschlossen. Im zentralen Hohlraum bzw. Rohr strömt die NH₃-arme Lösung und im äußeren Ringspalt der Ammoniakdampf aufwärts, wogegen im mittleren Hohlraum die NH₃-reiche Lösung im Gegenstrom herabfließt. Ein Stoffaustausch zwischen NH₃-reicher Lösung und Ammoniakdampf kann über Bohrungen im Mantel des mittleren Hohlraumes erfolgen.

Die EP 0 419 606 B1 enthält einen Austreiber für den Kältemitteldampf mit einer Gasblasenpumpe und von Flammrohren beheizten Pumpenrohren. Dabei ist jedem Flammrohr ein Pumpenrohr zugeordnet. Mit dieser relativ komplizierten Konstruktion aus Rohrbogen und Einzelrohren entsteht die Notwendigkeit zur Herstellung und Verschweißung vieler Einzelbauteile.

Weiterhin zeigt die US-A 5 713 216 einen Gas-Flüssigkeits-Wärmetauscher, welcher auch als Rektifikator eingesetzt werden kann. Der Wärmetauscher ist als unabhängiges Bauteil mit einem eigenen Gehäuse gestaltet weist eine innere und eine äußere Wand auf. Diese bilden eine ringzylindrischen Raum, der einen oder zwei Kanäle einschließt.

Der Erfindung liegt die Aufgabe zugrunde, den Aufbau eines Rektifikators in einer Diffusionsabsorptionsanlage zu optimieren, um damit den Fertigungsaufwand zu reduzieren.

Erfindungsgemäß wird dies mit den Merkmalen des Patentanspruches 1 gelöst. Vorteilhafte Weiterbildungen sind den Unteransprüchen zu entnehmen. innere und eine äußere Wand aufweist. Der eingeschlossene, ringzylindrische Zwischenraum bildet mindestens einen Kanal und schließt vorzugsweise zwei weitere Kanäle ein, welche mit Gefälle abwärts verlaufen.

Diese können durch zwei konzentrische, spiralförmig gewickelte Rohre realisiert sein. Weiterhin läßt sich mindestens ein spiralförmiger Kanal ausbilden, indem mindestens eine Wand mit Prägungen versehen ist, die bis zur gegenüberliegenden Wand reichen und mit dieser verbunden sind. Ebenso entstehen mindestens zwei spiralförmige Kanäle durch ein zwischen den Wänden angebrachtes Trennbauteil mit Prägungen, welche abwechselnd zur inneren und äußeren Wand vorspringen und damit verbunden sind.

In jedem Kanal kann entweder ein einzelnes Rohr oder zwei nebeneinander liegende Rohre verlaufen. Um den Wärmeaustausch zwischen den einzelnen Stoffströmen zu fördern, sind die Rohre mit Anlageflächen versehen. Beispielsweise durch Abflachungen stehen ein oder mehrere Rohre in einem Kanal miteinander und/oder mit den Wänden in wärmeleitendem Kontakt. Vorzugsweise ist das innere bzw. ein einzelnes Rohr für die arme und der umgebende Kanal für die reiche Ammoniak-Wasser-Lösung vorgesehen. Der Ammoniakdampf strömt entweder in einem separaten Kanal oder im Zwischenraum zwischen der inneren und äußeren Wand nach oben.

Günstig ist es, den Dreifach-Wärmetauscher mit dem vorstehend beschriebenen Aufbau aus Hydroformteilen zusammen zu setzen. Eine kompakte Bauform ergibt sich, wenn die Wände des Dreifach-Wärmetauschers gleichzeitig die Begrenzung des Kochers bilden.

Für den Stoffaustausch zwischen NH₃-reicher Lösung und Ammoniakdampf können Bohrungen im Mantel des Kanals mit NH₃-reicher Lösung vorgesehen werden. Diese sind durch den erfindungsgemäßen Aufbau frei zugänglich und lassen sich sehr leicht durch Einstechen oder Aufreißen in die Kanalwand einbringen. Es entstehen dadurch Fertigungsvorteile gegenüber der bekannten Ausführungsform, weil dort z. B. nach dem Einbringen der Bohrungen immer wieder das umgebende Außenrohr zugeschweißt werden musste.

Außerdem ist der Rektifikator mit Dreifach-Wärmetauscher in den Kocher integriert. Die gesamte Baueinheit wird von einer gemeinsamen druckbeständigen Hülle umgeben. Zusätzlich kann das Reservoir im unteren Bereich des Rektifikators angebracht sein, so dass sämtliche Kanäle direkt von dort ausgehen.

Zwischen dem vorzugsweise mit Ammoniakdampf gefüllten Zwischenraum und dem Reservoir ist eine Trennwand angebracht, welche mindestens eine Öffnung mit relativ kleinem Querschnitt als Verbindung zum Reservoir aufweist. Die Trennwand ist vorzugsweise horizontal ausgerichtet und oberhalb des maximalen Flüssigkeitspegels im Reservoir angebracht. Wahlweise ist sie dichtend mit der äußeren Wand des Behälters verbunden. Alternativ dazu genügt auch ein einfaches, passgenaues Fixieren, da ein geringer Spalt zwischen den beiden Zonen die Anlagenfunktion nicht beeinträchtigt und gleichzeitig die notwendige Durchlassöffnung darstellt. Außerdem ist es günstig, wenn die Trennwand ein Gefälle zu mindestens einer Öffnung aufweist, damit auf der Oberfläche keine Ammoniak-Ansammlung entsteht.

Durch die horizontal ausgerichtete Trennwand zwischen dem Dreifach-Wärmetauscher und dem Reservoir wird verhindert, dass der nach oben strömende Dampf mit der relativ großen Oberfläche der reichen Ammoniak-Wasser-Lösung im Reservoir in Kontakt tritt. Dieses Prinzip trifft auch für den Rektifikator zu. Hier soll zusätzlich zur Wärmeübertragung zwischen den Stoffströmen das Ammoniak ausgetrieben werden, so dass die nach unten fließende, reiche Ammoniak-Wasser-Lösung dabei möglichst in einem anderen Kanal als der Ammoniakdampf geführt wird.

Mit dem erfindungsgemäßen Aufbau reduziert sich der Fertigungsaufwand für Kocher, Rektifikator und Reservoir erheblich. Drei konzentrische Rohre als Dreifach-Wärmetauscher werden nicht mehr benötigt, weil das äußere Rohr durch die beiden Wände ersetzt wird. Separate Druckbehälter sind durch die Integration in ein gemeinsames Bauteil nicht mehr erforderlich, d. h. dass im Inneren der druckbeständigen Hülle die Teile mit einfacheren Techniken verbunden werden können, weil die Druckbelastung fehlt. Je nach Anwendungsfall erfüllen Punktschweißungen, Prägungen oder Press- bzw. Steckverbindungen ihren Zweck, da sogar geringe Leckströme zwischen zwei Kanälen, wie zum Beispiel zwischen der NH₃-armen und -reichen Lösung, die Anlagenfunktion nicht beeinträchtigen.

Die Zeichnung stellt ein Ausführungsbeispiel der Erfindung dar. Es zeigt:
- Fig. 1:: Einen Rektifikator zusammen mit dem unteren Bereich eines Kochers,
- Fig. 2:: einen Dreifach-Wärmetauscher mit zwei konzentrischen Rohren im senkrechten Schnitt,
- Fig. 3:: einen Dreifach-Wärmetauscher mit zwei Rohren in einem Kanal mit einer geprägten Wand im senkrechten Schnitt und
- Fig. 4:: einen Dreifach-Wärmetauscher mit einem Rohr in einem Kanal und mit einem geprägten Trennbauteil zwischen den Wänden im senkrechten Schnitt.

Der Dreifach-Wärmetauscher des Rektifikators ist im wesentlichen außen um einen Kocher mit sich vertikal erstreckenden Kocherrohren 1 angeordnet. Dabei werden die Wärmetauscherflächen von einer inneren und einer äußeren Wand 2, 3 eingeschlossen. Der ringzylindrische Zwischenraum 4 bildet mindestens einen Kanal 5 und enthält vorzugsweise zwei weitere Kanäle 6, 7, welche mit Gefälle abwärts verlaufen.

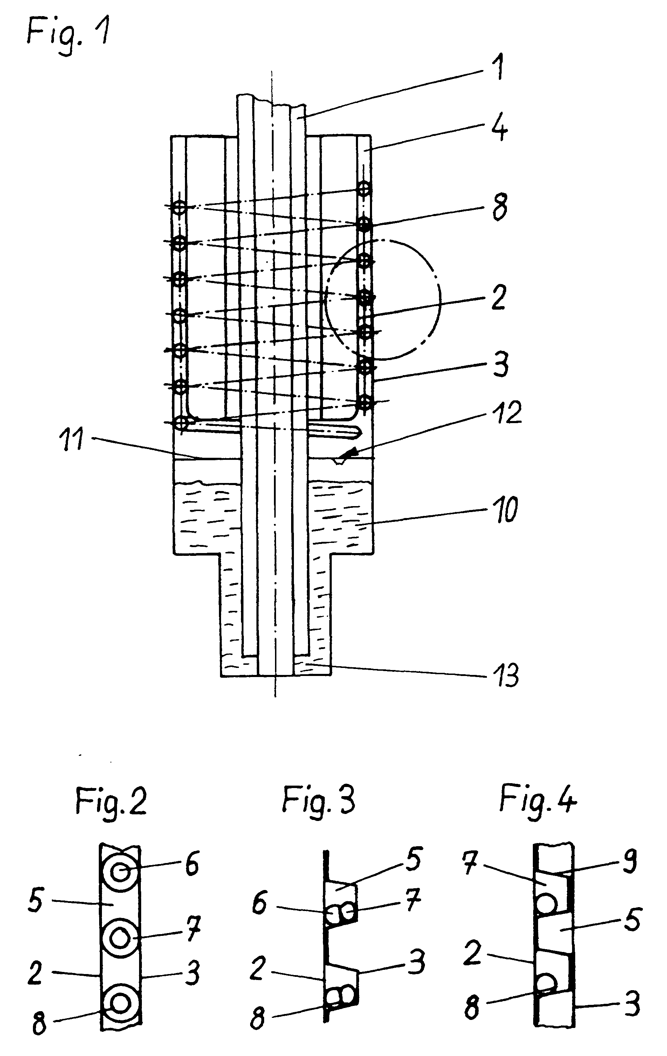

Die Kanäle 6, 7 werden in **Fig. 2** durch zwei konzentrische, spiralförmig gewickelte Rohre 8 gebildet. In **Fig. 3** ist der spiralförmige Kanal 5 von der inneren Wand 2 begrenzt und verläuft in taschenartigen Prägungen der äußeren Wand 3. Durch die Prägungen entstehen auf der äußeren Wand 3 Verbindungsflächen für den Abschluss zur inneren Wand 2, welche ebenso wie der Kanal 5 spiralförmig umlaufen und dessen einzelne Wicklungen voneinander trennen. Im Kanal 5 können die beiden anderen Kanäle 6, 7 in Form von zwei Rohren 8 angeordnet sein.

Nach dem Ausführungsbeispiel in **Fig. 4** entstehen mindestens zwei spiralförmige Kanäle 5, 7 durch ein zwischen den Wänden 2, 3 angebrachtes Trennbauteil 9 mit Prägungen. Diese springen abwechselnd zur inneren und äußeren Wand 2, 3 vor und sind damit verbunden. Der erforderliche dritte Kanal 6 ist hier durch ein einzelnes Rohr 8 realisiert. Alternativ zu den dargestellten Kantungen mit breiten Verbindungsflächen zu den Wänden 2, 3, kann auch ein Wellenprofil zur Begrenzung der Kanäle 5, 7 eingesetzt werden.

In den drei benachbarten Kanälen 5, 6, 7 strömen Ammoniakdampf sowie arme und reiche Ammoniak-Wasser-Lösung. Dabei wird für den Ammoniakdampf möglichst ein separater Kanal mit größerem Querschnitt vorgesehen, um zu verhindern, dass der nach oben strömende Dampf wieder in die nach unten fließende, reiche Ammoniak-Wasser-Lösung übergeht. Die Wärme soll zwischen den Stoffströmen übertragen werden und es findet ein NH₃-Austausch in einer Richtung, d. h. von der NH₃-reichen Lösung zum Ammoniakdampf, statt. Daher strömt der Ammoniakdampf in allen Figuren im Kanal 5. Vorzugsweise ist der innere Kanal 6 in **Fig. 1** bzw. das einzelne Rohr 8 in **Fig. 4** für die ebenfalls nach oben fließende, arme Ammoniak-Wasser-Lösung bestimmt. Der umgebende bzw. benachbarte Kanal 7 enthält die reiche Ammoniak-Wasser-Lösung.

Außerdem steht der ringzylindrische Zwischenraum 4, der Kanal 5 sowie der Kanal 7 mit dem unterhalb des Dreifach-Wärmetauschers angeordneten Reservoir 10 für das Lösungsmittel in Verbindung, welches mit dem Ansaugraum 13 im unteren Bereich des Kochers kombiniert ist. Der Zwischenraum 4 ist vom Reservoir 10 mit einer Trennwand 11 großflächig abgegrenzt und mit diesem nur über mindestens eine Öffnung 12 verbunden.

## Patentansprüche

1. Rektifikator für eine Diffusionsabsorptionsanlage, mit einem in einen Kälte- und Lösungsmittelkreislauf eingebundenen Dreifach-Wärmetauscher aus drei benachbarten Kanälen (5,6) für Ammoniakdampf, reiche und arme Ammoniak-Wasser-Lösung sowie einem im unteren Bereich angeordneten Kocher mit vertikalen Kocherrohren (1) in einem ringzylindrischen Raum (4),
**dadurch gekennzeichnet, dass** der Dreifach-Wärmetauscher in den Kocher integriert und im Wesentlichen außen um den Kocher bzw. die Kocherrohre (1) herum angeordnet ist, wobei eine innere und eine äußere Wand (2, 3) die Begrenzung des Kochers bilden, deren Zwischenraum (4) mindestens einen Kanal (5) bildet und zwei weitere Kanäle (6, 7) einschließt, welche mit Gefälle abwärts verlaufen.

2. Rektifikator nach Anspruch 1,
**dadurch gekennzeichnet, dass** im ringzylindrischen Zwischenraum (4) zwischen der inneren und äußeren Wand (2, 3) zwei konzentrische Rohre (8) spiralförmig abwärts verlaufen.

3. Rektifikator nach den Ansprüchen 1 und 2,
**dadurch gekennzeichnet, dass** mindestens eine Wand (2, 3) mit Prägungen versehen ist, die bis zur gegenüberliegenden Wand (2, 3) reichen und mit dieser verbunden sind, so dass mindestens ein spiralförmiger Kanal (5, 7) entsteht.

4. Rektifikator nach Anspruch 1,
**dadurch gekennzeichnet, dass** zwischen den Wänden (2, 3) ein Trennbauteil (9) mit Prägungen angebracht ist, welche alternierend so zur inneren und äußeren Wand (2, 3) vorspringen und damit verbunden sind, dass mindestens zwei spiralförmige Kanäle (5, 7) entstehen.

5. Rektifikator nach den Ansprüchen 1 bis 4,
**dadurch gekennzeichnet, dass** in einem Kanal (5, 7) ein einzelnes Rohr (8) oder zwei nebeneinander liegende Rohre (8) verlaufen.

6. Rektifikator nach den Ansprüchen 1 bis 5,
**dadurch gekennzeichnet, dass** ein oder mehrere Rohre (8) in einem Kanal (5, 7) miteinander und/oder mit den Wänden (2, 3) in wärmeleitendem Kontakt stehen und dass die Rohre (8) mit Anlage- bzw. Kontaktflächen versehen sind.

7. Rektifikator nach den Ansprüchen 1 bis 6,
**dadurch gekennzeichnet, dass** der innere Kanal (6) bzw. das einzige Rohr (8) für die arme und der umgebende Kanal (7) für die reiche Ammoniak-Wasser-Lösung vorgesehen ist und der Ammoniakdampf entweder in einem separaten Kanal (5) oder im Zwischenraum (4) zwischen der inneren und äußeren Wand (2, 3) strömt.

8. Rektifikator nach den Ansprüchen 1 bis 7,
**dadurch gekennzeichnet, dass** der Dreifach-Wärmetauscher aus Hydroformteilen besteht.

9. Rektifikator nach den Ansprüchen 1 bis 8,
**dadurch gekennzeichnet, dass** der Dreifach-Wärmetauscher oder die gesamte Baueinheit von einer druckbeständigen Hülle umgeben sind.

10. Rektifikator nach den Ansprüchen 1 bis 9,
**dadurch gekennzeichnet, dass** in einem druckbeständigen Behälter (3) der Kocher im unteren Bereich, der darüber liegende Dreifach-Wärmetauscher sowie das Reservoir (10) zusammengefasst sind und ein Ansaugraum (13) im unteren Bereich des Kochers als Reservoir (10) ausgebildet ist.

11. Rektifikator nach den Ansprüchen 1 bis 10,
**dadurch gekennzeichnet, dass** zwischen dem mit Ammoniakdampf gefüllten Zwischenraum (4) und dem Reservoir (10) eine Trennwand (11) angebracht ist, welche mindestens eine Öffnung (12) mit relativ kleinem Querschnitt als Verbindung zum Reservoir (10) aufweist.

12. Rektifikator nach den Ansprüchen 1 bis 11,
**dadurch gekennzeichnet, dass** die Trennwand (11) horizontal ausgerichtet und oberhalb des maximalen Flüssigkeitspegels im Reservoir (10) angebracht ist.

13. Rektifikator nach den Ansprüchen 1 bis 12,
**dadurch gekennzeichnet, dass** die Trennwand (11) wahlweise dichtend mit der äußeren Wand des Behälters (3) verbunden oder passgenau an dieser fixiert ist.

## Claims

1. A rectifier for a diffusion absorption installation, comprising a triple heat exchanger incorporated in a coolant and solvent circuit, comprising three adjacent channels (5, 6, 7) for ammonia vapour, rich and weak ammonia-water solution, and a boiler with vertical boiler pipes (1) arranged in the lower area in an annular cylindrical space (4),
**characterised in that** the triple heat exchanger is integrated in the boiler and is substantially arranged externally around the boiler or the boiler pipes (1), wherein one internal and one external wall (2, 3) form the boundary of the boiler, whose intermediate space (4) forms at least one channel (5) and encloses two further channels (6, 7) which run downwards with gradients.

2. The rectifier according to claim 1,
**characterised in that** two concentric pipes (8) run spirally downwards in the annular cylindrical space (4) between the internal and external wall (2, 3).

3. The rectifier according to claims 1 and 2,
**characterised in that** at least one wall (2, 3) is provided with embossings which extend as far as the opposing wall (2, 3) and are connected thereto so that at least one spiral channel (5, 7) is formed.

4. The rectifier according to claim 1,
**characterised in that** a separating component (9) with embossings is attached between the walls (2, 3), which alternately project towards the internal and external wall (2, 3) and are connected thereto so that at least two spiral-shaped channels (5, 7) are formed.

5. The rectifier according to claims 1 to 4,
**characterised in that** a single pipe (8) or two adjacent pipes (8) run in one channel (5, 7).

6. The rectifier according to claims 1 to 5,
**characterised in that** one or a plurality of pipes (8) in one channel (5, 7) are in heat-conducting contact with one another and/or with the walls (2, 3) and that the pipes (8) are provided with bearing or contact surfaces.

7. The rectifier according to claims 1 to 6,
**characterised in that** the inner channel (6) or the single pipe (8) is provided for the weak ammonia-water solution and the surrounding channel (7) is provided for the rich ammonia-water solution and the ammonia vapour flows either in a separate channel (5) or in the intermediate space (4) between the internal and external wall (2, 3).

8. The rectifier according to claims 1 to 7,
**characterised in that** the triple heat exchanger consists of hydroform components.

9. The rectifier according to claims 1 to 8,
**characterised in that** the triple heat exchanger or the entire structural unit are surrounded by a pressure-resistant sleeve.

10. The rectifier according to claims 1 to 9,
**characterised in that** the boiler in the lower region, the triple heat exchanger located thereabove and the reservoir (10) are combined in a pressure-resistant container (3) and a suction chamber (13) in the lower area of the boiler is embodied as a reservoir (10).

11. The rectifier according to claims 1 to 11,
**characterised in that** a separating wall (11) is attached between the intermediate chamber (4) filled with ammonia vapour and the reservoir (10), which has at least one opening (12) having a relatively small cross-section as a connection to the reservoir (10).

12. The rectifier according to claims 1 to 11,
**characterised in that** the separating wall (11) is horizontally aligned and is attached above the maximum liquid level in the reservoir (10).

13. The rectifier according to claims 1 to 12,
**characterised in that** the separating wall (11) is joined to the external wall of the container (3) in a sealed manner or is fixed thereto so that it fits exactly, as desired.

## Revendications

1. Rectificateur pour installation d'absorption d'émanations, comprenant un échangeur de chaleur triple incorporé dans un circuit de refroidisseur et de solvant composé de trois canaux voisins (5, 6) pour de la vapeur d'ammoniaque, de la solution ammoniaque-eau riche et pauvre, ainsi qu'un bouilleur disposé dans la zone inférieure et équipé de tuyaux de bouilleur verticaux (1) dans un espace en forme d'anneau cylindrique (4),
**caractérisé en ce que** l'échangeur de chaleur triple est intégré dans le bouilleur et disposé sensiblement à l'extérieur autour du bouilleur ou des tuyaux du bouilleur (1), une paroi intérieure et une extérieure (2, 3) constituant la limitation du bouilleur dont l'intervalle (4) forme au moins un canal (5) et inclut deux autres canaux (6, 7) qui s'étendent en pente vers le bas.

2. Rectificateur selon la revendication 1,
**caractérisé en ce que**, dans l'intervalle en forme d'anneau cylindrique (4) entre la paroi intérieure et extérieure (2, 3), deux tuyaux concentriques (8) s'étendent en spirale vers le bas.

3. Rectificateur selon les revendications 1 et 2,
**caractérisé en ce qu'**au moins une paroi (2, 3) est pourvue de gaufrages qui vont jusqu'à la paroi opposée (2, 3) et sont reliés à celle-ci, de sorte qu'on obtient au moins un canal en forme de spirale (5, 7).

4. Rectificateur selon la revendication 1,
**caractérisé en ce qu'**entre les parois (2, 3) est installée une pièce de séparation (9) présentant des gaufrages qui sont alternativement en saillie vers la paroi intérieure et extérieure (2, 3) et sont reliés à celle-ci de manière à former au moins deux canaux en forme de spirale (5, 7).

5. Rectificateur selon les revendications 1 à 4,
**caractérisé en ce que**, dans un canal (5, 7), s'étendent un tuyau isolé (8) ou deux tuyaux (8) disposés l'un près de l'autre.

6. Rectificateur selon les revendications 1 à 5,
**caractérisé en ce qu'**un ou plusieurs tuyaux (8) d'un canal (5, 7) sont en contact avec conduction thermique entre eux ou/ou avec les parois (2, 3) et que les tuyaux (8) sont pourvus de surfaces d'appui ou de contact.

7. Rectificateur selon les revendications 1 à 6,
**caractérisé en ce que** le canal intérieur (6) ou l'unique tuyau (8) est prévu pour la solution ammoniaque-eau pauvre et que le canal l'entourant (7) pour la solution riche et que la vapeur d'ammoniaque s'écoule soit dans un canal séparé (5), soit dans l'intervalle (4) entre la paroi intérieure et extérieure (2, 3).

8. Rectificateur selon les revendications 1 à 7,
**caractérisé en ce que** l'échangeur de chaleur triple est composé de pièces hydroformées.

9. Rectificateur selon les revendications 1 à 8,
**caractérisé en ce que** l'échangeur de chaleur triple ou l'ensemble de l'unité de construction sont entourés d'une enveloppe résistant à la pression.

10. Rectificateur selon les revendications 1 à 9,
**caractérisé en ce que**, dans une cuve résistant à la pression (3), sont regroupés le bouilleur dans la zone inférieure, l'échangeur de chaleur triple placé dessus ainsi que le réservoir (10) et qu'une cellule d'aspiration (13) est constituée dans la zone inférieure du bouilleur faisant office de réservoir (10).

11. Rectificateur selon les revendications 1 à 10,
**caractérisé en ce qu'**entre l'intervalle (4) rempli de vapeur d'ammoniaque et le réservoir (10), est installée une paroi de séparation (11) qui présente au moins une ouverture (12) à section transversale relativement petite, servant de liaison avec le réservoir (10).

12. Rectificateur selon les revendications 1 à 11,
**caractérisé en ce que** la paroi de séparation (11) est orientée horizontalement et est installée au dessus du niveau maximal de liquide dans le réservoir (10).

13. Rectificateur selon les revendications 1 à 12,
**caractérisé en ce que** la paroi de séparation (11) est au choix reliée hermétiquement à la paroi extérieure de la cuve (3) ou est fixée de manière ajustée sur celle-ci.
